**Europäisches Patentamt**

**European Patent Office**

**Office européen des brevets**

(1) Publication number: **0 206 082**
**B1**

# EUROPEAN PATENT SPECIFICATION

(45) Date of publication of patent specification: **31.01.90**

(51) Int. Cl.⁵: **B 60 J 5/06**

(21) Application number: **86107852.5**

(22) Date of filing: **09.06.86**

---

(54) Sliding door for a motor vehicle.

---

(30) Priority: **28.06.85 IT 6759385**

(43) Date of publication of application:
**30.12.86 Bulletin 86/52**

(45) Publication of the grant of the patent:
**31.01.90 Bulletin 90/05**

(84) Designated Contracting States:
**DE FR GB SE**

(56) References cited:
**GB-A-2 049 774**
**GB-A-2 159 208**
**US-A-4 152 872**
**US-A-4 157 846**

(73) Proprietor: **FIAT AUTO S.p.A.**
**Corso Giovanni Agnelli 200**
**I-10135 Torino (IT)**

(72) Inventor: **Fontana, Piercarlo**
**Via Blengino 26**
**I-12060 Magliano Alpi Soprano (IT)**

(74) Representative: **Bongiovanni, Guido et al**
**STUDIO TORTA Società Semplice Via Viotti 9**
**I-10121 Torino (IT)**

Courier Press, Leamington Spa, England.

**Description**

This invention relates to a motor vehicle having a sliding door, said door comprising at least one first and one second guide arranged to guide the front vertical edge and the rear vertical edge of the door respectively, in such a manner that the door, during its opening, moves through a trajectory comprising a first portion through which the door is substantially withdrawn from the side wall of the motor vehicle body to which it is fitted, and a second portion through which the door is moved substantially in an axial direction relative to said wall.

From the in-house state of the art relating to the door assembly of the described type, can be pointed out the following features. The first said guide comprises substantially a first curved portion, and hinged to the front vertical edge of the door there is a trolley provided with a pair of pins which engage with said guide and are spaced-apart along it, in order to guide the trolley and cause it to rotate as it moves along the guide. In this manner, the front vertical edge of the door, which is substantially hinged to the trolley, also moves during the first part of the opening travel along a substantially curved trajectory to withdraw from the side wall of the vehicle body. In door assembly of the described type, in order to form a seal against the edges of the aperture in the side wall of the vehicle body to which the door is fitted, gasket elements of a deformable material are normally fixed to said edges.

In these doors, it is easy to damage said gasket elements during the loading and unloading of the material onto and from the vehicle. These gasket elements are in a completely exposed position, they have no protection, and are very delicate with the result that they can be damaged even by small impacts.

The object of the present invention is to provide a motor vehicle having a sliding door assembly, said door being movable between an opening position wherein said door is suspended parallel and adjacent a side wall of the vehicle and a closing position wherein said door fills an opening in said vehicle side wall and lies flush with said side wall, and comprising at least one first and one second guide arranged to guide the front vertical edge and the rear vertical edge of the door respectively, the first guide being provided with a curved end portion, a rocker trolley being interposed between said door and said first guide and being provided with at least one pair of pins engaged with said first guide and spaced-apart along this latter, and a gasket element being interposed between the periphery of the door and the corresponding periphery of said opening for sealing same as the door is in its closing position, characterized by comprising:

— said gasket element fixed to the periphery of the door;

— a vertical upright adjacent to said wall, extending along said front vertical edge and forming an abutment member for it, said vertical upright being apt to receive a vertical portion of said gasket element;

— a flat plate which is connected to said door to extend over said front vertical edge and over said upright when the door is in its closing position and which is provided with at least one first projecting part to which there is hinged said rocker trolley; and

— a cavity formed in said side wall adjacent to the upright, apt to receive said projecting part with its rocker trolley and to be covered by said plate, when the door is in its closing position, said trolley rotating with respect to said front projecting part as it moves along said curved end portion of the first guide.

Further embodiments of the invention are set in the dependent claims.

The present invention will be more apparent from the detailed description given hereinafter by way of example with reference to the accompanying drawings in which:

Figure 1 is a diagrammatic section through a part of the door according to the invention, taken on a horizontal plane;

Figure 2 is a detail of the door of the preceding figure;

Figure 3 is a section through the door of Figure 2 on the line III-III.

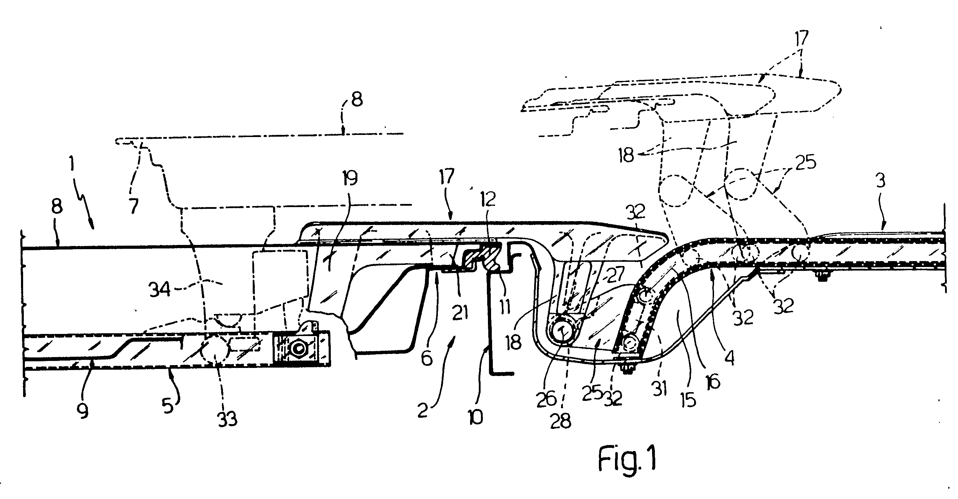

The door according to the invention, indicated overall by 1, is arranged to close an aperture 2 in a motor vehicle body, of which a part of the side wall 3 comprising said aperture is shown in Figure 1. The door comprises substantially a first guide 4 and a second guide 5 which are arranged to guide, respectively, the front vertical edge 6 of the door and the rear vertical edge 7 of the door, which is not shown in Figure 1 but is located at the opposite end to the edge 6. The door can conveniently comprise a front wall 8, which is to be substantially aligned with the wall 3 of the vehicle body when the door is in its closed position, and a rear wall 9. A vertical upright 10, provided with an abutment surface 11, is arranged to form the abutment member for the front vertical edge 6 of the door. A gasket element of deformable material 12 is fixed in any convenient manner to said edge, and is arranged to cooperate with the abutment surface 11 of the upright 10 as clearly shown in Figure 1.

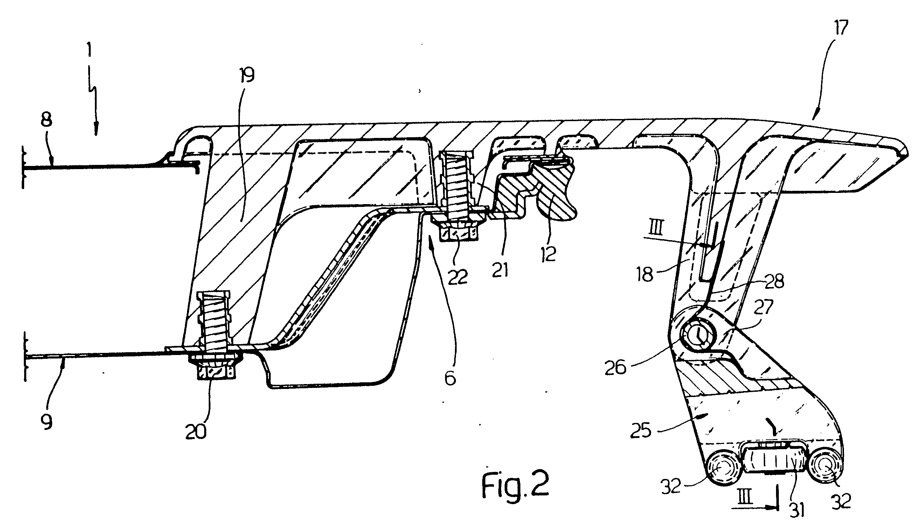

To one side of the upright 10 there is provided a cavity 15 arranged to house the substantially curved end portion 16 of the first guide 4. A flat plate 17, disposed parallel to the front wall 8 of the door, is connected thereto and extends from it over the upright 10 and cavity 15. The end of said plate, which is located substantially over the cavity 15, is provided with at least one first projecting part 18 which enters said cavity, and with at least one second projecting part 19 arranged to connect said plate to the door in any suitable manner, for example by screws 20 inserted through said projecting part. A third projecting part 21, disposed between the preceding ones (18, 19), is also arranged for connection to the door by screws 22 disposed in immediate proximity to the front vertical edge 6 thereof. A trolley 25 is hinged by a pin 26 to the first projecting part 18, which comprises a slot for housing a lug 27 provided on the trolley. Conveniently, a spring 28 coaxial to the pin 26 (Figure 2) comprises a pair of arms, one of which is arranged to rest against a surface of the projecting part 18 of the plate 17, and the other is arranged to rest against a surface of the trolley 25, in such a manner as to cause this latter to rotate with respect to said plate substantially in the clockwise direction in Figure 2.

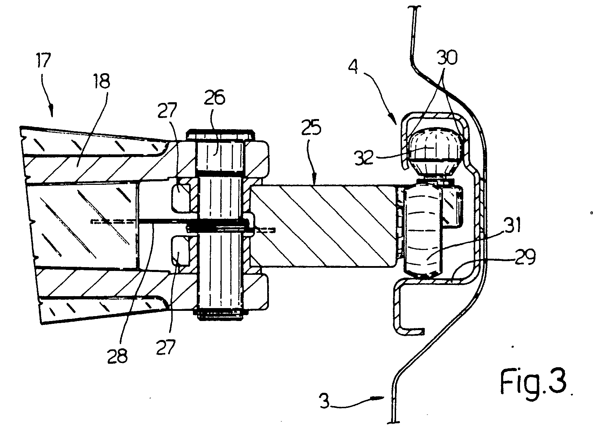

The first guide 4 has the cross-sectional shape shown in Figure 3, and comprises substantially a first flat track 29 and a pair of tracks 30 orthogonal to the preceding. A wheel 31 with its axis substantially horizontal is fixed to the trolley and is arranged to rest on the track 29 in order to support the door 1 by way of the plate 17. In addition, a pair of substantially vertical pins 32 are fixed to the trolley and are arranged to cooperate with the tracks 30 of the guide 4, as clearly shown in Figure 3, in order to cause said trolley to undergo a substantially curved trajectory during the first part of the opening movement of the door.

Conveniently, the rear vertical edge of the door 1 is guided in the second guide 5 by a pin 33 engaged with said guide and connected to said edge by an arm 34. That end of the guide 5 distant from the end shown in Figure 1 (not visible in this figure) is curved towards the interior of the vehicle body, so that during the first part of the opening movement of the door, the rear vertical edge 7 withdraws from the wall of the vehicle body.

The operation of the described door is as follows:

When the door is in its closed position, as shown in Figure 1, the gasket element 12 rests against the abutment surface 11 of the upright 10, and the plate 17 is substantially disposed over this upright and over the cavity 15. In addition, the trolley 25 is retained substantially within said cavity by the action of the first projecting part 18 of said plate, to which the trolley is hinged.

In order to open the door, the handle (not shown) provided on the door is gripped and a force is applied substantially in the direction perpendicular to the plane of the door. In this manner, the trolley 25 is made to move within the curved portion 16 of the guide 4, and thus the front vertical edge 6 of the door separates from the abutment surface, and simultaneously moves axially relative to the wall 3 of the vehicle body. In Figure 1, some successive positions in which this front vertical edge becomes disposed during the first part of the opening movement of the door are shown by dashed lines. During this first part of the movement, the rear vertical edge 7 also separates from the wall 3 of the vehicle body because of the shape of the second guide 5, and thus on termination of this first part of the movement, the door lies in a configuration in which it is substantially parallel to the wall 3 of the vehicle body and separated from it by a distance sufficient to be able to be moved axially relative to the said wall until it is in its completely open position.

During the closure movement of the door, the described stages are repeated in the opposite direction.

When the door is in its completely open position, the gasket element 12, which is fixed to said door, is in a protected position and is not exposed to the risk of being struck by the material passing through the aperture 2 during the loading and unloading of the motor vehicle.

**Claims**

1. A motor vehicle having a sliding door assembly (1), said door being movable between an opening position wherein said door is suspended parallel and adjacent a side wall (3) of the vehicle and a closing position wherein said door fills an opening (2) in said vehicle side wall (3) and lies flush with said side wall, and comprising at least one first (4) and one second (5) guide arranged to guide the front vertical edge (6) and the rear vertical edge of the door respectively, the first guide being provided with a curved end portion (16), a rocker trolley (25) being interposed between said door and said first guide (4) and being provided with at least one pair of pins (32) engaged with said first guide and spaced-apart along this latter, and a gasket element (12) being interposed between the periphery of the door and the corresponding periphery of said opening for sealing same as the door is in its closing position, characterized by comprising:

said gasket element (12) fixed to the periphery of the door;

a vertical upright (10) adjacent to said wall (3), extending along said front vertical edge and forming an abutment member for it, said vertical upright being apt to receive a vertical portion of said gasket element;

a flat plate (17) which is connected to said door to extend over said front vertical edge (6) and over said upright (10) when the door is in its closing position, and which is provided with at least one first projecting part (18) to which there is hinged said rocker trolley; and

a cavity (15) formed in said side wall (3) adjacent to the upright (10), apt to receive said projecting part (18) with its rocker trolley (25) and to be covered by said plate, when the door is in its closing position, said trolley rotating with respect to said front projecting part (18) as it moves along said curved end portion (16) of the first guide (4).

2. A motor vehicle as claimed in Claim 1, characterized in that said first projecting part (18) comprises a slot in which there is disposed and hinged a corresponding lug (27) of said trolley (25), between this latter and said projecting part (18) there being disposed at least one spring (28) arranged to cause said trolley to rotate in a predetermined direction relative to the projecting part (18) about the axis of said hinge.

3. A motor vehicle as claimed in Claim 2, characterized in that said lug of said trolley (25) comprises a slot housing said spring (28), which comprises a series of turns coaxial to the axis of said hinge and a pair of end arms one of which is arranged to rest against a surface of said first projecting part (18) of the plate (17) and the other of which is arranged to rest against a surface of said trolley (25).

4. A motor vehicle as claimed in one of the preceding claims, characterized in that said first guide (4) comprises a first substantially horizontal track (29) and a pair of second substantially vertical tracks (30) orthogonal to the preceding, said trolley (25) comprising a rotatable wheel (31) arranged to rest on said first track (29), said pins (32) of said trolley being arranged to rest against said second tracks (30).

5. A motor vehicle as claimed in one of the preceding claims, characterized in that said plate (17) comprises at least one second projecting part (19) which projects from it towards the inside of said door, and is disposed, relative to said front vertical edge (6) of said door, at the end distant from said first projecting part (18), said second projecting part (19) being connected to a rear wall (9) of said door, third projecting parts (21) of said plate disposed between said first (18) and second (19) projecting parts being connected to said rear wall (9) of the door.

6. A motor vehicle as claimed in one of the preceding claims, characterized in that said gasket element (12) is disposed substantially in contact with the inner surface of a front wall (8) of the door, said plate (17) resting on the outer surface of said front wall (8).

**Patentansprüche**

1. Motorfahrzeug das mit einer Scheibetüranlage (1) versehen ist, besagte Tür ist zwischen einer geöffneten Position, in der besagte Tür parallel und anliegend zu einer Seitenfläche (3) des Fahrzeugs aufgehängt ist, und einer geschlossenen Position, in der besagte Tür eine Öffnung (2) in besagter Fahrzeugseitenfläche ausfüllt, beweglich und liegt auf gleicher Ebene mit besagter Seitenfläche (3) und besteht mindestens aus einer ersten (4) und einer zweiten (5) Führung, die so befesigt sind, daß sie den vorderen vertikalen Rand (6) und den hinteren vertikalen Rand der Tür entsprechend führen, die erste Führung ist mit einem gebogenen Endstück (16) versehen, eine gebogenen Laufkatze (25) ist zwischen besagte Tür und besagte erste Führung (4) gefügt und mit mindestens einem Paar Bolzen (32) versehen, die in besagte erstere Führung eingehängt sind und mit Abstand entlang dieser letzteren befestigt sind, und ein Dichtungselement (12), das zwischen der Perpherie der Tür und der entsprechenden Peripherie der besagten Öffnung gefügt ist, um in der Art abzudichten, wie wenn die Tür in geschlossener Postion steht, dadurch gekennzeichnet, daß sie besteht aus:

besagtem Dichtungselement (12), das an der Perpherie der Tür befestigt ist,

einem vertikalen Stab (10), der an der besagten Fläche (3) anliegt, entlang des vorderen vertikalen Randes verläuft und für diesen ein angrenzendes Teil bildet, besagter vertikaler Stab ist in der Art, daß er ein vertikales Teilstück des besagten Dichtungselementes aufnehmen kann;

einer flachen Platte (17), die mit besagter Tür so verbunden ist, daß sie über besagten vorderen vertikalen Rand (6) hinausreicht und ebenso über besagten Stab (10), wenn sich die Tür in geschlossener Position befindet, und die mit mindestens einem ersteren Aufsatz (18) versehen ist, an den besagte Laufkatze eingehängt ist; und

einer Vertiefung (15), die sich in besagter Seitenfläche (3) befindet und die an den Stab (10) anliegt, in der Art, daß sie besagten Aufsatz (18) mit seiner Laufkatze (25) aufnehmen kann und von besagter Platte bedeckt wird, wenn sich die Tür in geschlossener Position befindet, besagte Laufkatze dreht sich in Bezug auf den vorderen Teil des Aufsatzes (18) so wie es sich entlang des gebogenen Endstückes (16) der ersten Führung (4) bewegt.

2. Motorfahrzeug nach Anspruch 1, dadurch gekennzeichnet, daß ersterer besagter Aufsatz (18) mit einer Nut versehen ist, in die ein entsprechender Flügel (27) der besagten Laufkatze (25) gehängt ist, zwischen dieser letzteren und besagtem Aufsatz (18) befindet sich mindestens eine Feder (28), die so montiert ist, daß sie die Laufkatze in eine bestimmte Richtung drehen läßt, entsprechend in Bezug zu dem Aufsatz (18), über den Achsen der besagten aufhängung.

3. Motorfahrzeug nach Anspruch 2, dadurch gekennzeichnet, daß besagter Flügel der besagten Laufkatze (25) aus einer Nut besteht, die besagte Feder (28) beherbergt, die wiederum aus einer Serie von Drehungen besteht, koaxial zu den Achsen der besagten Aufhängung und einem Paar Endarmstücken, wovon einer so montiert ist, daß er gegen eine Fläche des besagten ersteren Aufsatzes (18) der Platte (17) liegt und der andere so montiert ist, daß er gegen eine Fläche der besagten Laufkatze (25) liegt.

4. Motorfahrzeug nach einem der vorangegangenen Ansprüche dadurch gekennzeichnet, daß besagte erste Führung (4) aus einer ersten, grungsätzlich horizontalen Schiene (29) besteht und einem Paar zweiten, grundsätzlich vertikalen Schienen (30), die im richten Winkel zu den ersten stehen, besagte Laufkatze (25) besteht aus einem drehbáren Rad (31), so montieret, daß es auf erster besagter Schiene (29) bleibt, besagte Bolzen (32) besagter Laufkatze sind so montiert, daß sie gegen besagte zweite Schienen (30) bleiben.

5. Motorfahrzeug nach einem der vorangegangenen Ansprüche, dadurch gekennzeichnet, daß besagte Platte (17) mindestens aus einem zweiten Aufsatz (19) besteht, der von dieser aus gegen die Innenseite besagter Tür reicht und der in Bezug auf besagten vorderen vertikalen Rand (6) besagter Tür montiert ist, am Ende im Abstand von besagtem ersteren Aufsatz (18) besagter zweiter Aufsatz (19) ist mit einer hinteren Fläche (9) der besagten Tür verbunden, dritte Aufsätze (21) dieser besagten Platte sind zwischen besagten ersteren (18) und zweiten (19) Aufsätzen montiert und mit besagter Rückseite (9) der Tür verbunden.

6. Motorfahrzeug nach einem der vorangegangenen Ansprüche, dadurch gekennzeichnet, daß besagtes Dichtungselement (12) grundsätzlich so montiert ist, daß es Kontakt mit der Innenseite einer Vorderfläche (8) der Tür hat, besagte Platte (17) bleibt auf der Außenseite der besagten Vorderfläche (8).

**Revendications**

1. Véhicule automobile comprenant un ensemble de porte coulissante (1), ladite porte étant mobile entre une position ouverte, dans laquelle ladite porte est suspendue parallèle et adjacente à une paroi latérale (3) du véhicule et une position fermée dans laquelle ladite porte obture une ouverture (2) dans ladite paroi latérale du véhicule (3) et est alignée avec ladite paroi latérale, et comprenant au moins un premier (4) et un second (5) guides, agencés pour guider, respectivement, le bord vertical avant (6) et le bord vertical arrière de la porte, le premier guide étant pourvu d'une partie d'extrémité incurvée (16), un chariot basculant (25) étant interposé entre ladite porte et ledit premier guide (4) et étant pourvu d'une paire d'axes (32) au moins, venant en contact avec ledit premier guide et étant espacés le long de ce dernier, et un élément de joint d'étanchéité (12) étant interposé entre la périphérie de la porte et la périphérie correspondante de ladite ouverture, afin d'assurer l'étanchéité de celle-ci lorsque la porte est en position fermée, caractérisé en ce qu'il comprend:

ledit élément de joint d'étanchéite (12) fixé à la périphérie de la porte,

un montant vertical (10) adjacent à ladite paroi (3), s'étendant le long dudit bord vertical avant et formant un élément de butée pour celui-ci, ledit montant vertical étant apte à recevoir une partie verticale dudit élément de joint d'étanchéité,

une plaque plane (17) qui est reliée à ladite porte de façon à s'étendre sur ledit bord vertical avant (6) et sur ledit montant (10) lorsque la porte est en position fermée, et pourvue au moins d'une première partie en saillie (18) à laquelle est articulé ledit chariot basculant, et

une cavité (15) ménagée dans ladite paroi latérale (3), adjacente au montant (10), apte à recevoir ladite partie en saillie (18) avec son chariot basculant (25) et à être recouvert e par ladite plaque lorsque la porte est en position fermée, ledit chariot tournant par rapport à ladite partie en saillie avant (18) lorsqu'il se déplace le long de ladite partie d'extrémité incurvée (16) du premier guide (4).

2. Véhicule automobile selon la revendication 1, caractérisé en ce que ladite première partie en saillie (18) comprend une fente dans laquelle est disposée et articulée une patte correspondante (27) dudit chariot (25), étant disposé entre ce dernier et ladite partie en saillie (18) au moins un ressort (28) agencé pour amener ledit chariot à tourner dans une direction prédéterminée par rapport à la partie en saillie (18) autour de l'axe de ladite articulation.

3. Véhicule automobile selon la revendication 2, caractérisé en ce que ladite patte dudit chariot (25) comprend une fente logeant ledit ressort (28) qui comprend une série de spires coaxiales à l'axe de ladite articulation et une paire de branches d'extrémité, dont l'une d'elles est agencée pour porter contre une surface de ladite première partie en saillie (18) de la plaque (17) et l'autre est agencée pour porter contre une surface dudit chariot (25).

4. Véhicule automobile selon l'une quelconque des précédentes revendications, caractérisé en ce que ledit premier guide (4) comprend une première piste sensiblement horizontale (29) et une paire de secondes pistes sensiblement verticales (30), orthogonales à la précédente, ledit chariot (25) comprenant une roue rotative (31) agencée pour porter sur ladite première piste (29), lesdits axes (32) dudit chariot étant agencés pour porter contre lesdites secondes pistes (30).

5. Véhicule automobile selon l'une quelconque des précédentes revendications, caractérisé en ce que ladite plaque (17) comprend au moins une seconde partie en saillie (19) qui dépasse de celle-ci en direction de l'intérieur de ladite porte et est disposée, par rapport audit bord vertical avant (6) de ladite porte, à l'extrémité éloignée de ladite première partie en saillie (18), ladite seconde partie en saillie (19), étant reliée à une paroi arrière (9) de ladite porte, des troisièmes parties en saillie (21) de ladite plaque, disposés entre lesdits première (18) et second (19) parties en saillie étant raccordées à ladite paroi arrière (9) de la porte.

6. Véhicule automobile selon l'une quelconque des précédentes revendications, caractérisé en ce que ledit élément de joint d'étanchéite (12) est disposé sensiblement en contact avec la surface intérieure d'une paroi avant (8) de la porte, ladite plaque (17) reposant sur la surface extérieure de ladite paroi avant (8).

Fig.1

EP 0 206 082 B1

Fig.2

EP 0 206 082 B1

Fig.3